# EUROPEAN PATENT APPLICATION

(11) **EP 1 936 120 A2**
(43) Date of publication of application: **25.06.2008**
(21) Application number: 07254511.4
(22) Date of filing: 20.11.2007
(51) Int. Cl.: F01D 9/02, F01D 5/14

(54) **A transition duct for a gas turbine engine**

(30) Priority: 05.12.2006 GB 0624294
(71) Applicant: Rolls-Royce plc, 65 Buckingham Gate London SW1E 6AT (GB)
(72) Inventor: Green, Matthew James, Derby, DE3 9XH (GB); Harvey, Neil William, Derby, DE1 3LF (GB); Naylor, Edward Michael John, Market Depping Lincolnshire, PE6 8HZ (GB); Ortiz-Duenas, Cecilia, Minneapolis, MN 55414 (US); Hodson, Howard Peter, Godmanchester, PE29 2JA (GB); Miller, Robert John, Cambridge, CB2 1TA (GB)
(74) Representative: Gunn, Michael Alan

(57) **Abstract**

A transition duct for a gas turbine engine typically contains one or more non-turning fairings (12). These fairings (12) disturb the air flow through the duct, leading to flow separation and aerodynamic inefficiency. The invention proposes non-axisymmetric perturbations (36,38) in the duct end walls to minimise these undesirable aerodynamic effects. This permits the construction of shorter and lighter transition ducts, with more pronounced curvature.

## Description

This invention relates to transition ducts in gas turbine engines.

In a multi-spool jet engine the low-pressure (LP) system has a lower rotational speed and larger radius than the high-pressure (HP) core system. Hence, intermediate "S" shaped transition ducts are needed to connect the compressor or turbine of the high-radius LP system with the corresponding compressor or turbine of the low-radius HP system. These intermediate ducts often carry loads, support bearings and have thick structural struts passing through them, making them large, heavy and expensive structures of considerable complexity. Improving these ducts can lead to significant benefits both in the weight and in the performance of the engine.

In particular, if the curvature of the duct is made more pronounced, the required change of radius can be accomplished with a shorter duct and the whole engine can be made shorter and lighter. However, more pronounced curvature exacerbates the undesirable aerodynamic effects in the duct. This may worsen the aerodynamic performance of a downstream compressor or turbine, and may cause instability in either an upstream or a downstream compressor. These effects limit the design of current transition ducts.

It is therefore an object of the invention to provide a transition duct for a gas turbine engine that is shorter and lighter than known ducts, without introducing aerodynamic problems.

According to the invention, there is provided a transition duct for a gas turbine engine as claimed in claim 1.

The invention will now be described, by way of example, with reference to the accompanying drawings in which
Figure 1 is a perspective view of part of a hub end wall of a known transition duct containing a fairing, showing contours of static pressures near to the wall;
Figure 2 is a sectional side view of the duct of Figure 1, showing contours of velocity close to the fairing surface;
Figure 3 is a schematic plan view of a fairing in a transition duct, showing the changes to the hub end wall in a first embodiment of the invention;
Figure 4 shows the total pressure contours in axial planes close to the fairing leading edge (Figure 4(a)) and trailing edge (Figure 4(b)) for the embodiment of Figure 3;
Figure 5 is a perspective view of part of a hub end wall of a transition duct containing a fairing, showing contours of static pressures near to the wall in a known duct (Figure 5 (a)) and in a duct according to the invention (Figure 5(b));
Figures 6(a) and 6(b) are sectional side views of the ducts of Figures 5(a) and 5(b), showing contours of velocity close to the fairing surface;
Figure 7 shows contours of total pressure in the axial plane downstream of a fairing in a transition duct, without (Figure 7(a)) and with (Figure 7(b)) non-axisymmetric end wall profiling;
Figure 8 is a graph of static pressure against fairing surface perimeter for the boundary layer air flow in the embodiment of Figure 9; and
Figure 9 is a schematic plan view of a fairing in a transition duct, showing the changes to the hub end wall in a second embodiment of the invention.

A typical duct used between compressors today has an area ratio (Ain/Aout) of 1.0-2.5 and an aspect ratio (ΔR/length) of 0.3-0.6. The ducts used in current engines may in fact achieve only minimal diffusion. This is a very conservative choice in order to be absolutely sure that there is no risk of separations in the duct. When optimizing a compression system a conservative duct leads to significant compromises in both upstream and downstream compressors. Rear stages of the upstream compressor have to be designed at a non-optimum radius, and the design flow coefficient of the downstream compressor is limited by the exit Mach number of the upstream compressor and the choice of a conservative area ratio through the duct. There are inevitable cost, weight and fuel-burn penalties associated with such compromises, and these will be present for the complete life cycle of the product. If it were possible to use more pronounced curvatures in duct designs and design tools, much better optimization of the whole compression system would be possible.

Transition ducts between compressors should ideally diffuse the flow through them in order to minimise the flow velocity into the downstream compressor. That is to say, the cross-sectional area of the duct should ideally increase in the flow direction.

Where structural struts are present they will typically have a form of aerodynamic fairing around them to present an acceptably smooth surface to the gas flow. Typically the fairing is symmetrical in shape around the camber line of the strut, and both its surfaces are largely convex in plan view.

In some instances the strut and fairing will not be separate. Rather, the strut itself will be aerodynamically shaped.

Throughout this specification, the term "fairing" will be used for such an aerodynamic fairing, or for a fairing-shaped strut.

These fairings do not turn the air flow through the duct, and so there is no aerodynamic lift on them. These fairings should, therefore, not be confused with vanes, or static turning aerofoils, in a compressor or a turbine of a gas turbine engine.

In the case that the inlet flow is axially aligned, the fairing will also be so aligned. However, if the inlet flow is swirling (has a tangential velocity component) then the fairings will be staggered to be aligned to this flow.

In the case of swirling inlet flow and the duct changing radius (which typically it will) then the flow angle will change through the duct as a) the axial velocity changes (with area change) and b) the tangential velocity changes (with radius, following the conservation of angular momentum). If the flow angle through the duct does change then the stagger angle of the camber line will be modified accordingly. The fairing stagger angle will follow the flow - but it will not be turning it.

Although fairings improve the gas flow past the struts, their presence will exacerbate the diffusion of the flow locally and may give rise to flow separations, resulting in aerodynamic losses in the duct and poor inlet conditions to the downstream compressor. The latter may cause a loss of efficiency of the downstream compressor and/or make it more prone to surge.

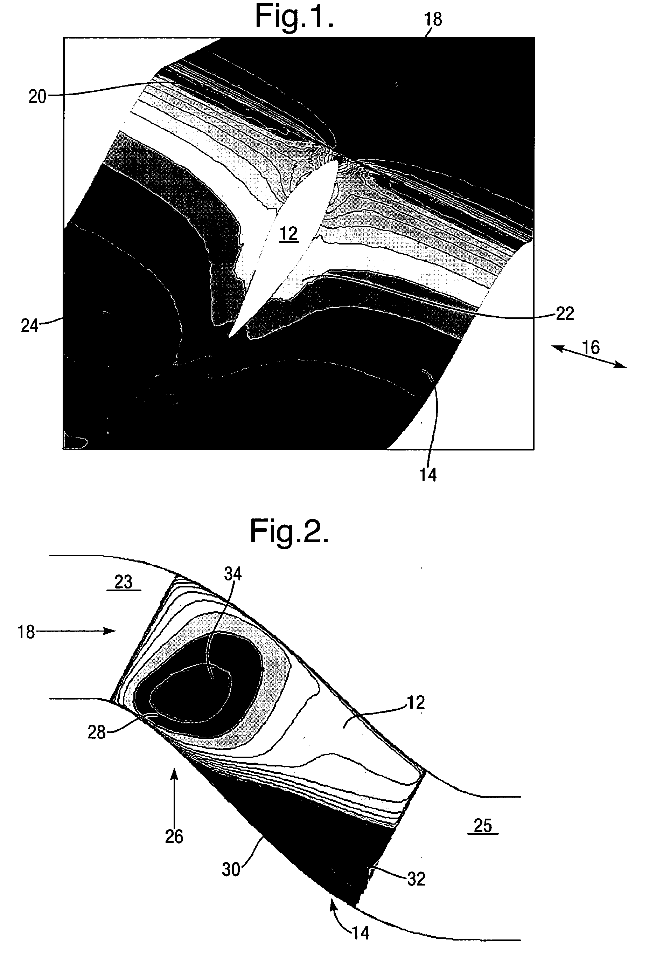

Figures 1 and 2 illustrate the problems with a diffusing duct with a (thick) fairing 12 in it. In this case the flow into the duct has no tangential component.

Figure 1 shows a plan view of contours of static pressure on the hub (radially inner) end wall 14. The circumferential direction is shown by the arrow 16, and the direction of the inlet gas flow by the arrow 18. The lowest values of static pressure are seen over the portion 20 of the end wall that has convex curvature, and it can be seen that low static pressure persists in the region 22 near to the fairing, even as the static pressure further away from the fairing (and at the same axial position) increases. It is these regions of low static pressure that give rise to the flow separations. Further downstream, the static pressure rises in the region 24 of the end wall that has concave curvature, and as the cross-sectional area of the duct increases.

Figure 2 shows, in sectional side view, contours of flow velocity close to the fairing 12 of Figure 1. The direction of the inlet gas flow is shown by the arrow 18, and the radially outward direction by the arrow 26. The inlet 23 to the transition duct is therefore at a greater radius than the outlet 25. The velocities shown are just outside the aerofoil boundary layer, but the effects of the end wall boundary layer can be seen. Note also that the static pressure and fluid velocity are in an inverse relationship.

In Figure 2 the curvature of the hub end wall 14 can be clearly seen. In the front part 28 of the transition duct the curvature is convex. This accelerates the flow, raising velocities and reducing the static pressure. This reduction in static pressure can be seen in Figure 1 (region 20). Further downstream, in the rearward part 30 of the transition duct, the hub end wall curvature is concave. This will have the effect of diffusing the flow. Because the duct is reducing in radius, from inlet to exit, it will be understood that this arrangement, with first convex and then concave curvature on the hub end wall, will generally be unavoidable. The flow field on the hub end wall is a particular problem. The early convex curvature raises the local flow velocity above the value that would be expected from the area change alone, and it may in fact be significantly higher than the inlet value. From this local peak in velocity the flow must then diffuse to the exit of the duct. Thus the maximum (local) diffusion may be much higher than that obtained from simply considering the ratio of exit to inlet flow velocities.

These effects would arise even for the duct alone. However, the presence of the fairing 12 exacerbates them. The region of lower static pressure due to the flow accelerating over the convex end wall curvature 28 extends further downstream near to the fairing 12 than it does further away from it (region 22 in Figure 1). This is due both to the blockage caused by the fairing 12 and to the convex curvature of its two sides, which continues to accelerate the flow compared with what it would have been in the duct alone. In Figure 2, region 34 shows the increased flow velocity arising from the blockage and convex surface curvature of the fairing 12. The result is that the diffusion gradient experienced by the flow in the later part of the fairing 12 / end wall 14 corner region is increased.

The aerodynamic conditions may be so adverse that flow separation occurs. This is shown in figure 2 where a significant region of reverse flow 32 occurs towards the downstream end of the fairing 12 surface near the hub. This significantly increases the losses in the duct. Note that this region of reverse flow typically does not extend across the whole circumferential width of the passage, but is confined to the region near both surfaces of the fairing 12.

It should also be understood that the location of the maximum thickness of the fairing 12 is typically in its forward (upstream) part. This will usually correspond to the location of the maximum thickness of the strut within it. By having the maximum thickness in the forward part of the strut the diffusion gradient along the surface of the fairing is reduced and the losses in the boundary layer (away from the end walls) are minimised.

It will be clear that if the aim of reducing duct length, and/or increasing the radius change for a given length, is to be achieved the radii of curvature of the different parts of the end walls must increase. The local acceleration and diffusion of the flow will also increase, making flow separation more likely or adding to the severity of any separation that has already occurred.

Three-dimensional shaping of vanes in gas turbine engines is a well-known technique, used to improve aerodynamic efficiency and suppress end wall flow separation. Examples of such shaping are the application of lean (often "compound lean"), sweep and dihedral. However, in the case of the transition duct described here, the strut will typically be a major load-bearing part of the gas turbine engine and the loads must be carried in a largely radial manner through it, so it is not possible to apply any significant three-dimensional shaping to such components.

Boundary layer bleed, from the strut and/or the end walls, is another known means of preventing separation in strongly diffusing flows. However, this is rarely if ever applied to practical gas turbine engines, because usually the benefit in aerodynamic efficiency will be lost due to the cost and weight of the bleed system. In addition the action of bleeding off the flow and either dumping it overboard or re-introducing it back into the gas flow in some other part of the engine will typically incur as much extra loss elsewhere as was gained in the duct.

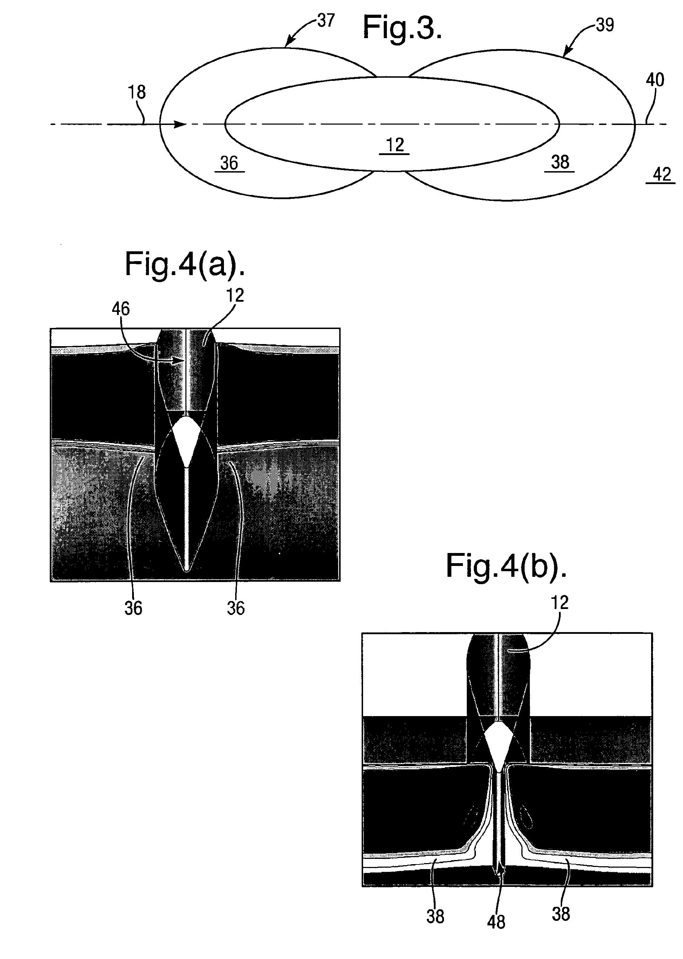

Figure 3 illustrates a first embodiment of the invention, and shows schematically profiling of the hub end wall around a fairing 12 in a transition duct.

Typically this arrangement will be found aerodynamically connecting two compressors in a multi-shaft gas turbine, the duct and compressors being arranged axisymmetrically around the centre-line of the gas turbine.

Typically the strut, and the fairing around it, will be aligned substantially radially. They may be leant in an axial sense but they will not usually be leant tangentially.

Typically in such an arrangement the first compressor will be at a higher radius than the second and rotating more slowly than it. Thus this transition duct will typically have a reducing radius through it.

In Figure 3, the direction of the inlet gas flow is shown by the arrow 18. At two axial locations, the end wall has been profiled to define perturbations 36, 38. Both perturbations have a circumferential extent of about 1/3 of the pitch between circumferentially-adjacent fairings 12, at their respective axial locations. Each perturbation 36, 38 will generally take the form of a protruding "blister" or a recessed "hollow" in the axisymmetric annulus profile. The perturbations 36, 38 will be described in more detail in due course.

Figure 4 illustrates the total pressure contours in axial planes close to the fairing 12 leading edge 46 (Figure 4(a)) and trailing edge 48 (Figure 4(b)). The positions of the perturbations 36, 38 are also shown in Figures 4(a) and 4(b) respectively.

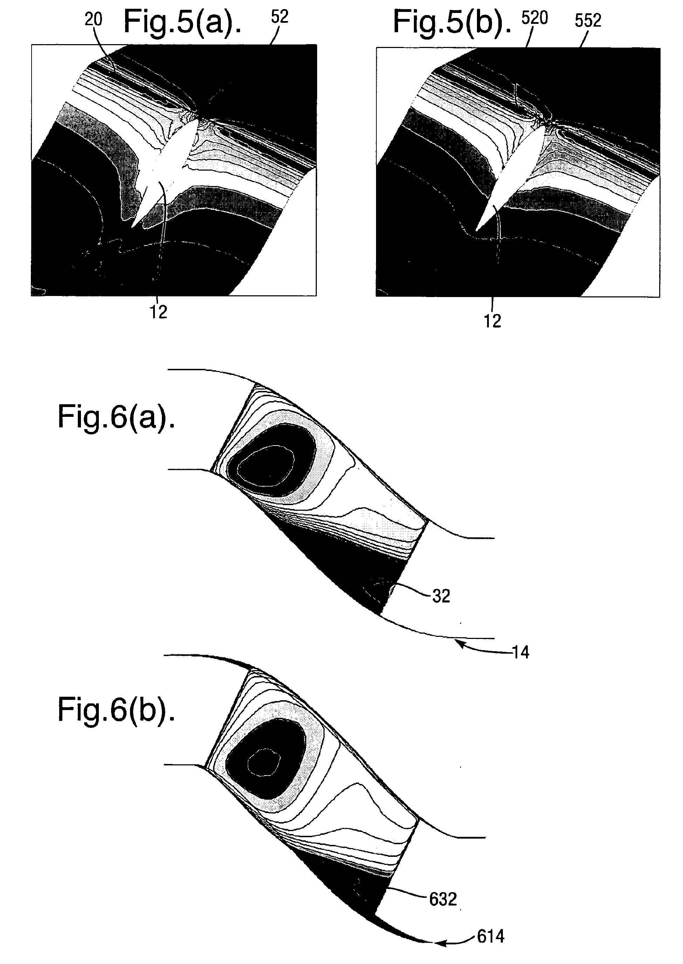

Figure 5 illustrates the effect of the hub end wall profiling of Figure 3, showing contours of static pressures near to the wall in a known duct (Figure 5(a)) and in a duct according to the invention with hub end wall profiling (Figure 5(b)).

Figure 6 shows contours of velocity close to the vane fairing surface in a known duct (Figure 6(a)) and in a duct according to the invention with hub end wall profiling (Figure 6(b)).

Referring to Figure 3, in the front part of the passage, near the location of fairing 12 maximum thickness, the perturbation 36 is symmetrical about the fairing camber line 40. Noting that this is a hub end wall, the radius (from the engine centreline) is reduced at the camber line. The perturbation 36 has its lowest point at the camber line, and therefore defines a "hollow" in the end wall. Away from the camber line, the amplitude of the perturbation reduces steadily until the end wall radius (from the engine centreline) is the same as that of the axisymmetric annulus. This occurs at the position indicated by the notional line 37, which defines the circumferential extent of the perturbation. The amplitude of the perturbation also reduces in an axially upstream direction from its maximum, to blend into the axisymmetric annulus at the appropriate point on the notional line 37.

Near the leading edge of the fairing (perhaps slightly upstream of it) this increases the local (convex) radius of curvature of the end wall (as viewed in the circumferential direction). This locally lowers the static pressure and raises the free stream velocity. Referring to Figure 5 it can be seen that the region of lowest static pressure is extended further circumferentially in the leading edge region (compare region 520 in Figure 5(b) with region 20 in Figure 5(a)) and the high pressure at the leading edge stagnation point is reduced (compare regions 552 and 52). However, downstream of this, the (convex) radius of curvature is reduced over most of the front part of the passage adjacent to the fairing thus reducing the acceleration of the flow in this region. This locally raises the static pressure and lowers the free stream velocity.

In the rear part of the passage the perturbation 38 has the opposite arrangement to the perturbation 36. Its highest point (i.e. the point of maximum radius from the engine centreline) is at the camber line 40, and it therefore defines a "blister" in the end wall. Away from the camber line, the amplitude of the perturbation reduces steadily until the end wall radius (from the engine centreline) is the same as that of the axisymmetric annulus. This occurs at the position indicated by the notional line 39, which defines the circumferential extent of the perturbation. The amplitude of the perturbation also reduces in an axially downstream direction from its maximum, to blend into the axisymmetric annulus at the appropriate point on the notional line 39.

This increases the (concave) radius of curvature (as viewed in the circumferential direction) of the end wall adjacent to the fairing over most of the rear part of the passage, thus generally reducing the diffusion of the flow in this region. Downstream of the trailing edge, the perturbed annulus line is faired back into the axisymmetric annulus 42. Locally the (concave) radius of curvature is increased thus increasing the diffusion.

The perturbations will have a circumferential extent, on each side of the fairing, typically about 50% of the fairing pitch at each location. The range of useful values will lie between 5% and 100% of the pitch. The circumferential extent of a perturbation is defined as described in the discussion of Figure 3 above, particularly in terms of the notional lines shown as 37 and 39 in that drawing. For example, if two adjacent perturbations each had a circumferential extent of 50% of pitch, then one or both of their notional lines 37, 39 would be coincident.

In the case where the fairings are uniformly spaced circumferentially and all have to have the same end wall profiling, then the perturbations will be symmetrical about the fairing camber lines and also about the mid-pitch lines. Thus the maximum circumferential extent could only be 50% of pitch in this case.

However, it may be the case that the fairing arrangement is not periodically uniform. It might happen, for example, that only every alternate fairing has the profiling applied. In this case the perturbation around one fairing could extend beyond the mid-pitch position, so that its circumferential extent would be greater than 50%, and it may extend as far as the next fairing, in which case its circumferential extent would be 100%.

The perturbations at different axial locations may have different maximum amplitudes. Typically the maximum amplitude will be 7% of the chord, but may lie in the range 2% to 15% of chord depending on the details of the flow conditions. (Higher speed flows require smaller amplitudes to achieve the same aerodynamic effects as lower speed flows).

The effect of these perturbations is that the static field on the hub end wall is more uniform and the corner separation is reduced (seen in figure 6 as the reduced extent of the region of low or reversed flow velocity in the downstream part of the duct - compare region 632 in Figure 6(b) with region 32 in Figure 6(a) or Figure 2). The static pressure experienced by the hub boundary layer close to the fairing 12 is now closer to that experienced by the hub boundary layer at mid-pitch (that is to say, the maximum diffusion gradient it experiences is reduced, and is closer to that at mid-pitch).

A smooth end wall shape is obtained by applying a spline in the streamwise direction through circumferentially corresponding points at these axial locations, to blend the perturbations smoothly into the axisymmetric end wall shape so as to present a smooth surface to the gas flow.

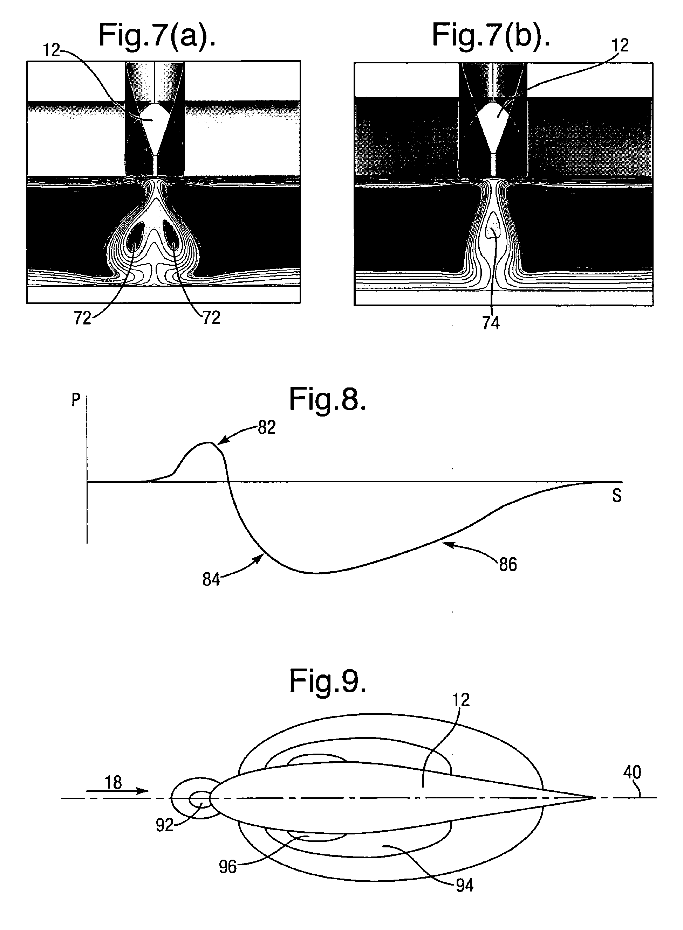

Figure 7 shows contours of total pressure in an axial plane at the exit from the duct, for a known duct (Figure 7(a)) and for a duct according to the invention with non-axisymmetric perturbations (Figure 7(b)). The areas of greatest loss are shown by the regions 72 in Figure 7(a) and by the region 74 in Figure 7(b), from which it can be seen that the extent and depth of the losses have been significantly reduced. Reductions in loss of 20% may be achieved, with a corresponding improvement in the aerodynamic efficiency.

As noted already, the presence of a fairing in an annular duct changes the pressure field on the duct wall. Around the upstream part of the fairing the flow is accelerated and around the downstream part the flow is diffused. This extra diffusion on the duct wall can cause the boundary layer to separate close to the strut surface. By locally altering the area of the duct close to the fairing surface the effect of this acceleration and diffusion can be reduced.

In regions where the fairing is accelerating the flow the end walls must be opened out. Increasing the passage area would, on its own, act to decelerate the flow.

Where the fairing is decelerating the flow the end walls must be contracted. Decreasing the passage area in this way would, on its own, act to accelerate the flow.

Careful design of the area ruling should enable the flow near the fairing to experience the same diffusion (from inlet to exit) that the mid-passage region experiences. This embodiment is illustrated in figures 8 and 9.

Figure 8 illustrates the typical static pressure distribution along one surface of the fairing where it intersects with the axisymmetric end wall - in the particular case where there is no net diffusion through the duct. Static pressure, P, is plotted against fairing surface perimeter, S. The static pressure rises (82) near the leading edge as the inlet flow tends to stagnate here. Downstream of this the static pressure falls (84) as the flow is accelerated by the blockage of the fairing. After the plane of maximum thickness the fairing thins, the flow diffuses and the static pressure rises again (86).

To minimise this pressure variation a second embodiment of the invention is proposed, in which the end wall profiling is as shown in Figure 9. The amplitudes of the perturbations, and their axial locations, are defined such that they compensate for the reduction in the cross-sectional area of the passage due to the blockage of the fairing. This will be known as "non-axisymmetric end wall area ruling". In this case there will be a perturbation 92 in the leading edge region such that the radius of the end wall with respect to the engine centreline is increased at the intersection with the camber line 40. This will locally reduce the flow area, raising flow velocities and reducing the static pressure. This will compensate for the increase in static pressure where the flow stagnates at the leading edge. The maximum amplitude of the perturbation may be at the leading edge or upstream of it.

Downstream of this there will be another perturbation 94 such that the radius of the end wall with respect to the engine centreline is decreased at the intersection with the camber line. This will locally increase the flow area adjacent to the fairing, lowering flow velocities and raising the static pressure. This will compensate for the decrease in static pressure due to the blockage of the fairing in the flow. Typically the maximum amplitude 96 of the perturbation will be axially located in the plane of maximum vane thickness. The chord-wise extents and amplitudes of the perturbations will typically lie within the same ranges as before.

As in the first embodiment, a smooth shape is obtained for the end wall by applying a spline fit in the streamwise direction through circumferentially corresponding points at different axial locations, to blend the perturbations smoothly into the axisymmetric end wall shape.

The end wall profiling is defined by perturbations at, at least, two axial locations.

The end wall profiling may be applied to either (radially inner or radially outer) end wall of the transition duct. Typically for a transition duct with reducing radius it will be most effective if applied to the hub end wall.

In practice the optimum design will incorporate a combination of controlling local end wall curvature and non axisymmetric end wall area ruling.

To achieve the required change in curvature the annulus must locally be raised or lowered, which will alter the flow area. Conversely, the area ruling cannot be implemented without changing the local surface curvature.

Ultimately the designer must finalise the choice of perturbation amplitudes and locations to minimise the effect of the presence of the fairing on the hub end wall static pressure distribution.

An optimum aerodynamic design for the annulus wall may be obtained by the designing the duct without a fairing present to achieve maximum diffusion along the annulus wall while avoiding (2-D) boundary layer separation. The fairing is then replaced and non axisymmetric end wall profiling applied to restore the end wall static pressure field to be as close as possible to what it was in the absence of the fairing.

Where the duct wall static pressure field is made more uniform, the circumferential variation in static pressure experienced by upstream and/or downstream blade rows will also be reduced. This may be of benefit in reducing the aero-mechanical forcing on these blade rows and improve the component lives by reducing the unsteady stresses induced in them.

It may be the case that the fairings are, not arranged uniformly in the circumferential direction. In this case the dimensions of the perturbations may be based on the chord and pitch local to each fairing.

Where the interaction of the static pressure field of the fairing with adjacent blade rows is a major issue, i.e. the aero-mechanical forcing significantly reduces these component lives, then it is a known solution to adopt an arrangement of "Bragg struts". In this case small vanes or fairings, sometimes in a helical spiral arrangement, are added between the larger fairings around the struts. In this case, non axisymmetric end wall profiling may be applied to the larger and the smaller fairings but in each case the perturbations will be based on the chord and pitch local to each.

## Claims

1. A transition duct for a gas turbine engine, the duct comprising circumferentially-extending radially inner (14) and outer end walls defining an annular flow path for a gas flow, the duct having different radii from the engine centreline at its upstream and downstream ends, the duct further comprising a radially extending fairing (12), in which at least one of the end walls has a profile defined by a plurality of non-axisymmetric perturbations (36, 38) at a succession of axial positions so as to reduce or prevent separation of the end wall boundary layer flow near to the fairing (12) in use.

2. A transition duct as in claim 1, in which the perturbations are applied to the radially inner end wall (14).

3. A transition duct as in claim 1 or claim 2, in which the fairing (12) has a camber line (40) and the perturbations (36, 38) are symmetrical about the camber line.

4. A transition duct as in claim 3, in which the fairing (12) is symmetrical about the camber line (40).

5. A transition duct as in any preceding claim, in which at least some of the perturbations (36, 38) alter the local radius of curvature of the end wall.

6. A transition duct as in claim 5, in which the local convex radius of curvature of the end wall, viewed in the circumferential direction, is increased in the region of the fairing leading edge and the local concave radius of curvature of the end wall, viewed in the circumferential direction, is increased in the region of the fairing trailing edge.

7. A transition duct as in claim 5 or claim 6, in which the circumferential extent of the perturbations (36, 38) is between 5% and 100% of the fairing pitch.

8. A transition duct as in any of claims 5 to 7, in which the circumferential extent of the perturbations (36, 38) is substantially 50% of fairing pitch.

9. A transition duct as in any of claims 5 to 8, in which the maximum amplitude of the perturbations (36, 38) is between 2% and 15% of chord.

10. A transition duct as in any of claims 5 to 9, in which the maximum amplitude of the perturbations (36, 38) is substantially 7% of chord.

11. A transition duct as in any preceding claim, in which at least some of the perturbations (36, 38) locally alter the cross-sectional area of the duct close to the fairing surface.

12. A transition duct as in claim 11, in which the cross-sectional area of the duct is reduced in the region of the fairing leading edge and increased in the region of the fairing trailing edge.

13. A transition duct as in claim 11 or claim 12, in which the circumferential extent of the perturbations (92, 94) is between 5% and 100% of the fairing pitch.

14. A transition duct as in any of claims 11 to 13, in which the circumferential extent of the perturbations (92, 94) is substantially 50% of fairing pitch.

15. A transition duct as in any of claims 11 to 14, in which the maximum amplitude of the perturbations (92, 94) is between 2% and 15% of chord.

16. A transition duct as in any of claims 11 to 15, in which the maximum amplitude of the perturbations (92, 94) is substantially 7% of chord.

17. A transition duct as in any preceding claim, in which at least one spline fit is applied through circumferentially corresponding points at different axial locations to blend the perturbations (36, 38, 92, 94) smoothly into the axisymmetric end wall profile.

18. A gas turbine engine incorporating a transition duct according to any preceding claim.

19. A transition duct substantially as described in this specification, with reference to and as shown in Figures 3, 4, 5(b), 6(b) and 7(b) of the accompanying drawings.

20. A transition duct substantially as described in this specification, with reference to and as shown in Figures 8 and 9 of the accompanying drawings.
